# EUROPEAN PATENT APPLICATION

(11) **EP 1 431 320 A1**
(43) Date of publication of application: **23.06.2004**
(21) Application number: 02028724.9
(22) Date of filing: 20.12.2002
(51) Int. Cl.: C08F 290/06, C09D 4/00, C09D 133/04, C08G 16/00

(54) **Curable liquid compositions containing acrylate groups and beta-dicarbonyl compounds**

(71) Applicant: DAINIPPON INK AND CHEMICALS, INC., Itabashi-ku Tokyo (JP)
(72) Inventor: Lachowicz, Artur, Dr., 13403 Berlin (DE); Gaudl, Kai-Uwe, Dr., 13403 Berlin (DE); Nahm, Steven H., Dr., 13403 Berlin (DE); Grahe, Gerwald F., Dr., 13403 Berlin (DE)
(74) Representative: Albrecht, Thomas, Dr.

(57) **Abstract**

The invention describes curable liquid compositions containing reactive acrylate groups, which are produced by reacting monofunctional vinyl compounds and multifunctional acrylic esters with β-dicarbonyl compounds having more than one acidic C-H function. These material can be polymerized or crosslinked by free radical polymerization, UV (ultraviolet) radiation or electron-beam. The curable liquid compositions are suitable for producing curable coatings, printing inks, adhesives, or moulding compositions.

## Description

The invention describes acrylate groups containing curable liquid compositions produced by reacting monofunctional vinyl compounds and multifunctional acrylic esters with β-dicarbonyl compounds having more than one acidic C-H function. These materials can be polymerized or crosslinked by free radical polymerization, UV (ultraviolet) radiation or electron beam.

Curable compositions, containing acrylate groups are widely used in coating industry, as for example as coating materials for paper, wood, metal and plastic, in printing inks, adhesives and sealants. Polymerization or crosslinking of acrylate group containing compositions, also termed hereinafter as hardening or curing, is achieved by polymerization of acrylate group containing resins in the curable compositions in presence of radical initiators. Such initiators can be activated by UV (ultraviolet) irradiation or heat. Another option is the polymerization initiated by electron beam. In general, commercial production of resins, which contain acrylate groups, is performed by esterification of oligomeric or polymeric multifunctional alcohols with an excess of acrylic acid. Such a process is described for example in comprehensive literature such as "Prepolymers and Reactive Diluents for UV- and EB-curable Formulations", P.K.T. Oldring (Ed.), SITA Technologies, London, UK, 1991, page 124, 131. Despite widely used, this process is not entirely free of problems. Acrylic acid is, as a rule, rather unstable at elevated reaction temperatures and carries the risk of spontaneous uncontrolled polymerization, if not properly inhibited. The purification of acrylate group containing resins from excess of acrylic acid and acidic catalyst is another problem, aggravated by high viscosity of the products. In the US specifications 5945489, 6025410 and WO specification 0100684, the inventors explain an appropriate route to make acrylate (acrylic ester) group containing curable liquid compositions, which are prepared by Michael addition of β-dicarbonyl compounds, e.g. acetoacetates and excess of multifunctional acrylate compounds. The use of acrylates, which are commercially available mass products, such as trimethylolpropane triacrylate, the short reaction time, the low reaction temperature and the avoidance of acrylic acid and purification steps make this process particularly interesting as alternative method to produce reactive acrylate group containing curable liquid compositions.
However, the limitation of this process is that a very large excess of multifunctional acrylate compounds has to be used to avoid gellation during preparation and to provide liquid products having useful viscosity. The excess of multifunctional acrylate compounds cannot be separated from the composition and remains as a reactive diluent. Therefore, most of the properties attributed to the final cured coating will be based on the cured properties of those multifunctional acrylate compounds. This is a limiting drawback, restricting product versatility and variety of product properties. Moreover, use of high amounts of expensive multifunctional acrylate compounds also adversely affects raw material cost benefits in the mass production of such acrylated liquid compositions, as only low amounts of inexpensive β-dicarbonyl groups containing (e.g. acetoacetylated) resins can be included.

Primary objective of this invention is to obtain reactive acrylate groups containing curable liquid compositions, prepared with less excess of multifunctional acrylate compounds and an increased amount of β-dicarbonyl compounds, compared to the prior art, in order to achieve both, technical and economical improvement. Additional objectives of this invention are to provide a method to introduce acrylic functions into oligomers and polymers and a method to introduce functional groups (other than acrylate groups) into oligomers and polymers, containing reactive acrylate groups.

According to a first aspect, the invention relates to an acrylate group containing curable liquid composition obtainable by reacting
(a) at least one monofunctional vinyl compound,
(b) at least one multifunctional acrylic ester, with
(c) at least one β-dicarbonyl compound having more than one acidic C-H function
wherein
the equivalent ratio of the vinyl groups of the monofunctional vinyl compound (a) to the acidic C-H functions of the compound (c) is in the range from 0.01 : 1 to 0.9 : 1
and
the equivalent ratio of all unsaturated groups from both monofunctional vinyl compound (a) and multifunctional acrylic esters (b) to the acidic C-H functions of the compound (c) is > 1.05 : 1.

The term monofunctional vinyl compound denotes that such a compound contains only one vinyl group. The vinyl group can be a part of an acrylate group or part of a group other than acrylate. The term multifunctional acrylic ester (multifunctional acrylate) denotes that such a compound contains at least two acrylate groups. The term "equivalent ratio" describes the ratio of unsaturated groups (vinyl groups or acrylate groups) to CH-acidic functions of β-dicarbonyl groups. It should be noted that each unsubstituted β-dicarbonyl group carries two CH-acidic functions. Thus, a mixture containing 1 mole butyl acrylate and 1 mole ethyl acetoacetate shows the equivalent ratio of vinyl groups to acidic CH functions of 1 : 2, whereas a mixture containing 1 mole trimethylolpropane triacrylate and 1 mole dimethyl malonate exhibits the equivatent ratio of vinyl groups to acidic CH functions of 3 : 2. Finally, a mixture containing 2.5 mole methyl vinyl ketone, 1.5 mole dipropyleneglycol diacrylate and 2 mole acetylacetone shows the equivalent ratio of vinyl groups to acidic CH functions of 5.5 : 4.

In the acrylate group containing liquid curable compositions of this invention we are able to reduce the weight percentage of acrylate compounds to 37-54% without gellation or crosslinking, whereas acrylate weight percentage of the prior art - for the comparable functionality of reactants - is between 75 % and 90 %. The introduction of more weight percent of β-dicarbonyl compounds yields that the product properties are much less governed by the acrylate compounds. Moreover, it was also achieved that higher molar amounts and higher acidic C-H equivalents of the β-dicarbonyl compounds can be applied compared to prior art.

In course of the experiments it turned out unexpectedly, that the acrylate group containing compositions of this invention, which exhibit lower total acrylate equivalents, do not differ in coating properties, compared to a control product, prepared without the use of monofunctional vinyl compounds (see table 1 and explanation thereinafter).
Another technical advantage of the compositions of this invention, including monofunctional vinyl compounds is that adhesion to substrates can be improved (see table 2 and explanation thereinafter).
Apart from the technical advantage also economical benefits are anticipated for the production of acrylate group containing mass products. The introduction of large amounts of low cost materials such as alkyd resins and rosin esters into acrylated systems has been the objective of several inventions for example in US specification 4035320 or in WO specification 87/0448. Our examples 16-31 show, that large amounts of low cost polyester polyols can be transformed into acrylate group containing polymers by reaction of multifunctional acrylates with previously prepared products of monofunctional vinyl compounds and acetoacetylated polymers. This is a new method for the introduction of reactive acrylic functions into polymers and an additional objective of this invention. This method enables to use high amounts of inexpensive oligomeric and polymeric material for the production of reactive acrylated materials.

The principle of the chemical reactions occurring during the formation of the composition of this invention is exemplarily depicted below for a polymer bound multifunctional acetoacetate, a monofunctional vinyl compound and a multifunctional acrylate. 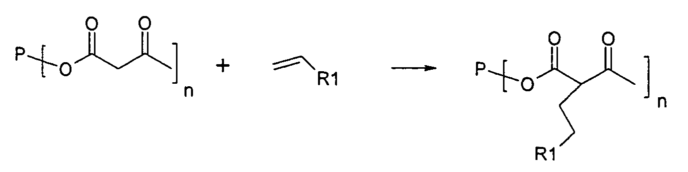 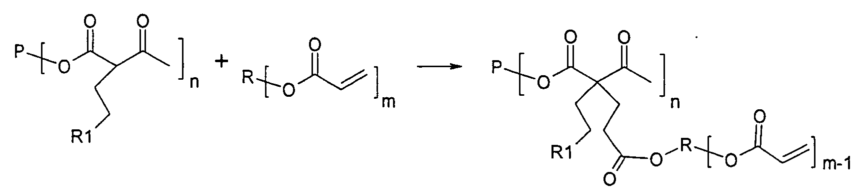
- P =: non reactive oligomer or polymer

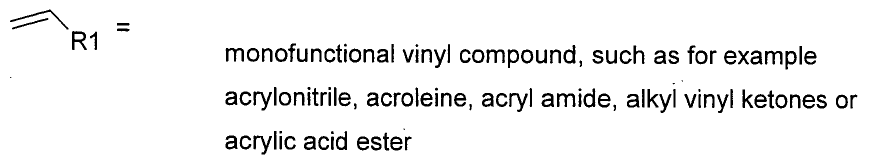

Monofunctional vinyl compounds, which are suitable according to the invention are such vinyl compounds, which are Michael acceptors or in other words such vinyl compounds, which are able to react with β-dicarbonyl compounds in a Michael reaction as for example, acroleine, acrylonitrile, methyl vinyl ketone, vinyl sulfonate, acrylamide, methyl acrylate, ethyl acrylate, propyl acrylate, butyl acrylate, tert.-butyl acrylate, hexyl acrylate, 2-ethylhexyl acrylate, n-octyl acrylate, nonyl acrylate, decyl acrylate, stearyl acrylate, isobornyl acrylate, adamantyl acrylate, phenyl acrylate, benzyl acrylate, naphtyl acrylate.

Suitable multifunctional acrylates, which denote di- or higher functional acrylates, are for example 1,2-ethanediol diacrylate, 1,3-propanediol diacrylate, 1,4-butanediol diacrylate, 1,6-hexanediol diacrylate, dipropylene glycol diacrylate, neopentyl glycol diacrylate, ethoxylated neopentyl glycol diacrylate, propoxylated neopentyl glycol diacrylate, tripropylene glycol diacrylate, bisphenol A diglycidyl ether diacrylate, ethoxylated bisphenol A diglycidyl ether diacrylate, polyethylene glycol diacrylate, trimethylolpropane triacrylate, ethoxylated trimethylolpropane triacrylate, propoxylated trimethylolpropane triacrylate, propoxylated glycerol triacrylate, tris(2-acryloyloxyethyl) isocyanurate, pentaerythritol triacrylate, ethoxylated pentaerythritol triacrylate, pentaerythritol tetraacrylate, ethoxylated pentaerythritol tetraacrylate, ditrimethylolpropane tetraacrylate, dipentaerythritol pentaacrylate, dipentaerythritol hexaacrylate, acrylate group containing oligomers and polymers obtained by reacting polyepoxides with acrylic acid (epoxyacrylates) or obtained by reacting polyester polyols with acrylic acid and/or monomeric alkyl acrylates (polyester acrylates). Particularly suitable are monomeric difunctional or trifunctional acrylates, such as for example tripropylene glycol diacrylate, trimethylolpropane triacrylate and bisphenol A diglycidyl ether diacrylate.

Suitable β-dicarbonyl compounds, having more than one acidic C-H function, are from the group of β-diketones or β-ketoesters or malonic acid esters, include for example: pentane-2,4-dione, hexane-2,4-dione, heptane-2,4-dione, 1-methoxy-2,4-pentanedione, 1-phenyl-1,3-butanedione, 1,3-diphenyl-1,3-propanedione, 4,6-dioxoheptanoic acid methyl ester, 5,7-dioxooctanoic acid methyl ester, benzoylacetic acid methyl ester, benzoylacetic acid ethyl ester, benzoylacetic acid butyl ester, propionylacetic acid ethyl ester, propionylacetic acid butyl ester, butyrylacetic acid methyl ester, acetoacetic acid methyl ester, acetoacetic acid ethyl ester, acetoacetic acid isopropyl ester, acetoacetic acid butyl ester, acetoacetic acid tert.-butyl ester, acetoacetic acid-(2-methoxyethyl) ester, acetoacetic acid-(2-ethylhexyl) ester, acetoacetic acid lauryl ester, 2-acetoacetoxyethyl acrylate, acetoacetic acid benzyl ester, 1,4-butanediol diacetoacetate, 1,6-hexanediol diacetoacetate, neopentyl glycol diacetoacetate, 2-ethyl-2-butyl-1,3-propanediol diacetoacetate, cyclohexanedimethanol diacetoacetate, ethoxylated bisphenol A diacetoacetate, trimethylolpropane triacetoacetate, glycerol triacetoacetate, pentaerythritol triacetoacetate, pentaerythritol tetraacetoacetate, ditrimethylolpropane tetraacetoacetate, dipentaerythritol hexaacetoacetate, methyl acetoacetamide, ethyl acetoacetamide, dimethyl malonate, diethyl malonate, dibutylmalonate, dihexyl malonate, acetoacetate group containing oligomers and polymers obtained by transesterification of acetoacetic acid alkyl esters with oligomeric or polymeric alcohols, and acetoacetate group containing oligomers and polymers obtained by copolymerisation of 2-acetoacetoxyethyl (meth)acrylate, malonate group containing oligomers and polymers obtained by transesterification of dialkyl malonates with di- or trifunctional alcohols. Particularly suitable are oligomeric and polymeric diacetoacetates, produced by transesterification of polyester alcohols with alkyl acetoacetates.
Some multifunctional acetoacetates are commercially available or they can be prepared as described in the prior art as for example in the US specification 3,016,297 column 18, example X.

In general, a catalyst is required to accelerate the reaction (Michael addition) between monofunctional vinyl compounds, the multifunctional acrylates and β-dicarbonyl compounds. Such catalysts, which catalyze the Michael addition, are known from the prior art and include salts from the group comprising ammonium fluorides such as for example benzyltrimethylammonium fluoride, benzyltriethylammonium fluoride, benzyltributylammonium fluoride, tetramethylammonium fluoride, tetraethylammonium fluoride and tetrabutylammonium fluoride, compounds from the group comprising ammonium hydroxides and ammonium methoxides, such as for example benzyltrimethylammonium hydroxide (Triton B), benzyltriethylammonium hydroxide, benzyltributylammonium hydroxide, tetramethylammonium hydroxide, tetraethylammonium hydroxide, tetrabutylammonium hydroxide, benzyltrimethylammonium methoxide and benzyltrimethylammonium methoxide, organic amines with a pK > 11, such as for example piperidine, 1,4-dihydroxypyrimidine, 2-phenylbenzimidazole, 2-hydroxypyridine, diazabicyclooctane, diazabicyclononene, diazabicycloundecene and tetramethylguanidine, inorganic bases such as for example sodium carbonate, potassium carbonate, calcium carbonate, calcium hydroxide, sodium hydroxide, potassium hydroxide, sodium hydride, lithium diisopropylamide and sodium amide, organic metal salts based on alcohols and phenols such as for example sodium methylate, potassium methylate, sodium ethylate, potassium ethylate, magnesium ethanolate, sodium tert.-butylate, potassium tert.-butylate, sodium phenolate and potassium phenolate, metallic sodium, metallic potassium, alkyl magnesium halogenides, butyl lithium, tertiary organic phosphines such as for example triethylphosphine, tripropylphosphine, triisopropylphosphine, trivinylphosphine, tributylphosphine, triisobutylphosphine, tri-tert.-butylphosphine, triallylphosphine, tris(2,4,4-trimethylpentyl)phosphine, tricyclopentylphosphine, tricyclohexylphosphine, cyclohexyldiphenylphosphine, dicyclohexylphenylphosphine, triphenylphosphine, tri-n-octylphosphine, tri-n-dodecylphosphine, tribenzylphosphine, dimethylphenylphosphine, 1,2-bis(diphenylphosphino)ethane, 1,3-bis(diphenylphosphino)propane, 1,4-bis(diphenyl-phosphino)butane. Particularly suitable catalysts for the production of the products according to the invention are tetrabutylammonium fluoride, benzyltrimethylammonium fluoride, benzyltrimethylammonium hydroxide, tetrabutylammonium hydroxide, tetramethylguanidine (TMG), diazabicycloundecene (DBU), sodium tert.-butylate, tri-n-octylphosphine (TOP) and potassium hydroxide. The aforementioned catalysts may also be used in the form of a mixture of several catalysts.

The preparation of acrylate group containing curable liquid compositions according to this invention is carried out by reacting monofunctional vinyl compounds and multifunctional acrylic acid esters with the β-ketoesters and /or β-diketones and / or β-diesters in the presence of the aforedescribed catalysts. The amount of catalyst added is 0.3-5.0 wt.% referred to the total reaction mixture, and preferably 0.7-2.5 wt.%. The reaction proceeds already at room temperature. However, in order to accelerate the process, higher temperatures in the range of 60°-140°C may be applied, preferably 80°-110°C. In the preferred embodiment, the monofunctional vinyl compounds are reacted in a first step with the β-dicarbonyl compounds, having an excess of C-H-acidic functions compared to vinyl functions. In order to provide complete reaction, vinyl group equivalents should not exceed 80% of the acidic C-H equivalents of the β-dicarbonyl groups or in other words, the acidic C-H equivalents of the β-dicarbonyl groups must be in excess. In case that a full conversion of the monofunctional vinyl compound is desired, the progress of the reaction can be analytically checked before the addition of the multifunctional acrylate compound. It can be proven by gas chromatography, whether the monomeric vinyl compounds have completely reacted. Moreover, size exclusion chromatography shows by increased molecular weight, compared to the starting material, that the monofunctional vinyl compounds have become part of the β-dicarbonyl compounds. Furthermore, carbon-13 nuclear magnetic resonance spectroscopy is able to confirm, that the monofunctional vinyl compounds are attached to the methylene group between the two carbonyl groups, as new signals, typically between 50 and 70 ppm, occur. 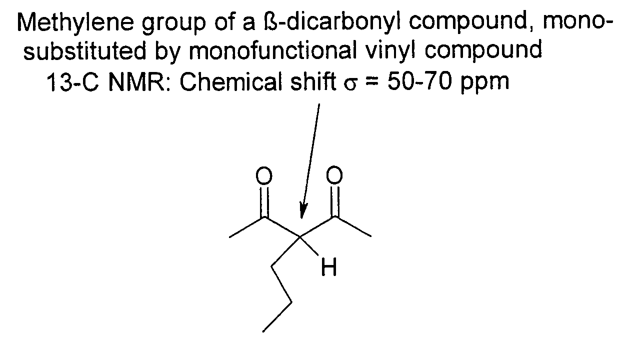 These new signals can be assigned to monosubstituted β-dicarbonyl groups by the "attached proton test" (APT).
As soon as it has been confirmed that the monofunctional vinyl compounds have completely reacted, the multifunctional acrylate compounds are added and react with the remaining C-H acidic functions of the β-dicarbonyl compounds in a second step. However, it is also possible to add the monofunctional vinyl compounds and the multifunctional acrylates all at once. This method is suitable, if the molar amount of vinyl compounds is small compared to the molar amount of multifunctional acrylate compounds or when it is known that the monofunctional vinyl compounds react much faster with the β-dicarbonyl compounds than the multifunctional acrylate compounds. This method is also suitable, if the presence of a not completely reacted monofunctional vinyl compound does not cause any problems. During the reaction of monomeric vinyl compounds and multifunctional acrylates with β-dicarbonyl compounds, the reaction mixture is degassed with air. In the case of polymerization sensitive vinyl compounds or acrylates, polymerization inhibitors may also be added in an amount of 0.01 to 0.5 wt.% in order to prevent a premature polymerization of vinyl groups or acrylate groups during the production. Suitable polymerization inhibitors are for example 4-methoxyphenol and hydroquinone. The reaction time is governed by the character as well as the amount of catalyst and reaction temperature and is defined by the point in time after which the viscosity of the forming, acrylate group containing composition no longer rises and remains constant. The reaction may also be controlled by titration. The titration of the acetoacetate groups is possible with sodium methoxide in pyridine. (Organic Functional Group Analysis, F.E. Critchfield (Ed.) Pergamon Press, Oxford 1963, page 29). The β-dicarbonyl material is dissolved in freshly distilled pyridine and titrated with 0.1 N sodium methoxide solution in methanol against thymolphthalein. The final product may also be characterized by titration of the acrylate equivalents of the acrylated group containing compositions of this invention by the morpholine method (Organic Functional Group Analysis, F.E. Critchfield (Ed.) Pergamon Press, Oxford 1963, page 116). The acrylate groups are reacted with an excess of the secondary amine morpholine. Then, the remaining excess of free morpholine is quenched by acetylation by acetic anhydride. Finally, the tertiary amine, which was formed by the reaction of acrylate group and morpholine, is titrated with perchloric acid.

The acrylate group containing liquid curable compositions which are prepared and characterized according to the aforementioned procedures exhibit several advantages over the prior art. In US specifications 6025410 for example, the inventors use large amounts of excess of multifunctional acrylates (column 8-11, tables 2-4) in order to get liquid compositions and to avoid gellation. The weight percentage of acrylate compounds is usually very high, for example between 75 % and 90 % of the total weight, for mixtures having a functionality ratio = 2 : 4 or higher. In example 10-15 of this invention, we show that the weight percentage of the acrylate compounds can be reduced to 37-54% without gellation or crosslinking.
As a further result, it was also achieved that higher molar amounts and higher acidic C-H equivalents of the β-dicarbonyl compounds can be used compared to prior art. For example, in the claim 1 of US specifications 6025410, it is taught that for a system having an acrylate acceptor functionality of 2 and a β-dicarbonyl donor functionality of 4, the equivalent ratio (C=C group: C-H group) must be equal or greater 4.5:1. In our examples 4 and 5 (table 4, column 9), we show, that for an acrylate acceptor functionality of 2 (dipropylene glycol diacrylate) and a β-dicarbonyl donor functionality of 4, our equivalent ratio of is 2,95 and 3,66. These values show that the approach of this invention enables to work beyond the boundaries given by the prior art and to include more of the β-dicarbonyl compounds by weight as well as by equivalents.
The introduction of more weight percent of β-dicarbonyl compounds yields that the product properties are much less governed by the acrylate compounds. Moreover, by mono substitution of the difunctional β-dicarbonyl groups with monofunctional vinyl compounds, also any functionality is possible in contrast to the prior art, where only an even functionality (2,4,6,8, etc.) of the β-dicarbonyl compounds is disclosed. All those merits described aforementioned provide an increased variety of products and product properties compared to the prior art. The reactive acrylate group containing liquid curable compositions are colorless or slightly yellowish liquids, showing viscosities of 1000-100000 mPas at 25°C. The molecular weights, in our case the weight number averages Mn, are in the range of 500-15000.

Additional objective of this invention is also the introduction of functional groups into curable acrylate group containing oligomers and polymers.
This is achieved by reaction of functionalized monofunctional vinyl compounds and multifunctional acrylic esters with β-dicarbonyl compounds having more than one acidic C-H function. The term functionalized monofunctional vinyl compound denotes that a vinyl compound having one vinyl group, contains at least one more functional group. A functional group is a group having atoms other than carbon and hydrogen. Such a functional group is supposed to impart a additional properties into a reactive polymer or oligomer.
The introduction of functional groups into polymerizable or crosslinkable systems has been the objective of many inventions. In general, functional groups shall impart new or special properties into polymers such as adhesion, controlled surface tension, crosslinkable groups, hydrophobicity, increased glass transition temperature, slip etc. One older method is to add functionalized acrylate monomers to acrylated resins. During the curing or hardening process acrylate groups of functionalized acrylate monomers and acrylated resins fuse, and the functional groups are fixed to the polymer. However, the drawback of this method is, that in general, especially under UV irradiation, a part of the functionalized acrylate monomers is not polymerized and remains as free monomers in the coating. This may cause problems such as migration of the unreacted monomers to the surface, yellowing and reduced polymer functionality.
With our concept we are able to introduce functional groups into reactive polymers, without the risk of residual functionalized monomers in the composition, as we can prove by analytical methods, that the functionalized vinyl compounds have completely reacted.
The concept of this invention to introduce functional groups into acrylate group containing oligomers and polymers is exemplarily depicted below for a polymer bound multifunctional acetoacetate, a functionalized monofunctional vinyl compound, having an additional functional group Rf, and a multifunctional acrylate.

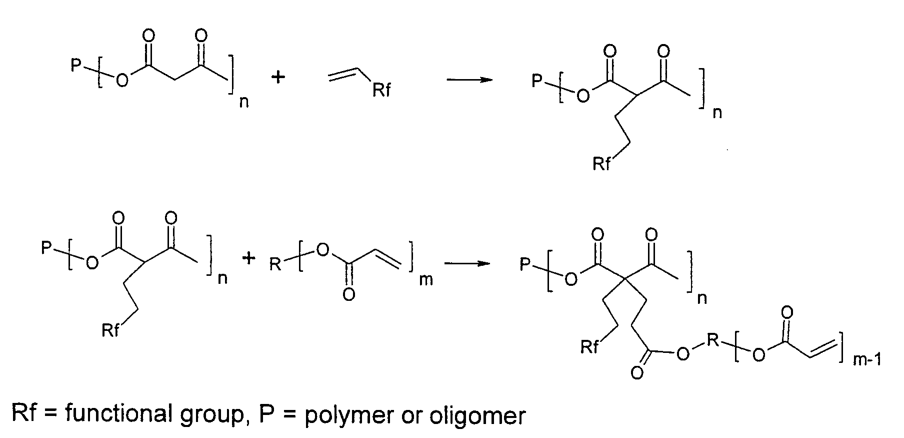

Functionalized monofunctional vinyl compounds are available in a large variety. Suitable compounds for this invention are such vinyl monomers which are able to react in a Michael addition with β-dicarbonyl compounds. Such materials comprise for example functionalized acrylates such as 2-hydroxyethyl acrylate, glycidyl acrylate, 2-isocyanatoethyl acrylate, polyethyleneglycol monoacrylate, polyethyleneglycol monomethylether monoacrylate as for example butoxyethoxyethyl acrylate, perfluoroalkyl acrylates as for example perfluorooctyl acrylate, alkoxy siloxane-functional acrylates, such as poly(dimethylsiloxane) monoacrylate, acrylamide, functionalied acrylamides such as diacetone acrylamide, N-hydroxymethyl acryl amide, etherified N-hydroxymethyl acryl amides, such as butoxymethyl acryl amide, acrylonitrile, acroleine, methyl vinyl ketone and vinyl sulfonate.

The conditions to react functionalized monofunctional vinyl compounds with β-dicarbonyl compounds are the same as for non-functionalized monofunctional vinyl compounds and described aforementioned in this invention. Usually, in order to provide complete reaction, vinyl group equivalents should not exceed 80% of the acidic C-H equivalents of the β-dicarbonyl groups, or in other words, the acidic C-H equivalents of the β-dicarbonyl groups must be in excess. The reaction progress can be controlled by analytical methods, especially gas chromatography, infrared spectroscopy or size exclusion chromatography confirm that the vinyl monomers have completely reacted, before the multifunctional acrylates react with the remaining C-H acidic functions of the β-dicarbonyl component. As also described aforementioned, it is also possible to add the functionalized monofunctional vinyl compounds and multifunctional acrylates at the same time.

The acrylate group containing liquid curable compositions produced according to the described methods are suitable for producing hardenable or curable coatings, printing inks, adhesives, sheets and moulding compositions.

The curable compositions of this invention may be cured by means of heat or preferred by UV (ultraviolet) radiation or electron beam. In general, the compositions of this invention may be cured under UV-light without additional photo initiator. Such a behavior is already described by the prior art. For special performance a photo initiator may be added. Examples of suitable photo initiators, include benzoin and its derivatives, for example, benzoin ethers, such as isobutyl benzoin ether and benzyl ketals, such as benzyl dimethyl ketal, 2-hydroxy-2-methyl-1-phenylpropan-1-one and 4-(2-hydroxyethoxy)phenyl-2-hydroxy-2-propyl ketone. Others include acyl phosphines, such as 2,4,6-trimethylbenzoyl diphenylphosphine oxide. Aryl ketones can also be used, such as 1-hydroxycyclohexyl phenyl ketone, 2-benzyl-2-dimethylamino-1-(4-morpholinophenyl)-butan-1-one, 2,2-dimethoxy-2-phenylacetophenone, mixtures of benzophenone and 1-hydroxycyclohexyl phenyl ketone, perfluorinated diphenyl titanocene, and 2-methyl-1-(4-(methylthiophenyl)-2-(4-morpholinyl))-1-propanone. Hydrogen abstraction free radical type photoinitiators can be used in combination with the above or alone such as Michler's ketone (4,4'-bisdimethylamino benzophenone), Michler's ethyl ketone (4,4'-bisdiethylamino benzophenone ethyl ketone), benzophenone, thioxanthone, anthraquinone, ketocoumarine, anthracene, or derivatives thereof, and the like. Usually, the amount of initiators present typically ranges between 0.1 and 10 weight %, preferred 1 to 5 weight %.
As light source, UV bulbs are available in several designs. Microwave exited electrode-less bulbs are preferred. The Fusion "H" bulb is a typical UV source consisting primarily of an electrical discharge in medium pressure mercury vapor. It is also often considered as the industrial standard. The Fusion "D" bulb also contains a small amount of a metal halide. The "Fusion V-bulb" is similar to the "D" bulb but emits a larger fraction at longer wavelengths. For the curing of the products of this invention, the "H" bulb is the preferred choice.

Table 1 shows results of the UV-curing of curable compositions of this invention. Five coatings were made by dilution of compositions of examples 1, 4, 7, 10 and 13 with dipropyleneglycol diacrylate (DPGDA), followed by addition of 3 wt % Darocure 1173 photoinitiator (coating viscosity: 360-400 mPas). These coatings were drawn down on aluminum test panels in a thickness of 50 µm (wet) and cured together with the control coating (No. 6) by 1 pass under a 300 W/inch Fusion "D" bulb. The result are reported in table 1.

**Table 1:**

| Coating | Composition of example | ¹Milliequivalent C=C | ²Coating viscosity | ³UV Dose mJ/cm² | ⁴MEK 2x rubs | ⁵Pencil Hardness |
|---|---|---|---|---|---|---|
| 1 | 1 | 3.48 | 380 mPas | 180 | > 100 | 2H |
| 2 | 4 | 3.10 | 390 mPas | 180 | > 100 | 2H |
| 3 | 7 | 2.76 | 360 mPas | 180 | > 100 | 2H |
| 4 | 10 | 2.31 | 380 mPas | 180 | > 100 | 2H |
| 5 | 13 | 1.79 | 360 mPas | 180 | > 100 | 2H |
| 6 | ⁶Control | 4.79 | 400 mPas | 180 | > 100 | 2H |

| | | | | | | |
|---|---|---|---|---|---|---|
| ¹The acrylate equivalents of the acrylated compositions (example 1,4,7,10,13 and control) were measured by the morpholine method (Organic Functional Group Analysis, F.E. Critchfield (Ed.) Pergamon Press, Oxford 1963, page 116). The acrylate groups are reacted with an excess of the secondary amine morpholine. Then, the remaining excess of free morpholine is acetylated by acetic anhydride. Then, the tertiary amine, which was formed by the reaction of acrylate group and morpholine is titrated with perchloric acid. | | | | | | |
| ²Coating viscosity, measured with an ICI cone and plate viscosimeter at a shear rate of 5000 D⁻¹ | | | | | | |
| ³Radiant energy of the UV-bulb (total UVA-C) at the surface of the coating measures with the radiometer UVICURE from EIT company | | | | | | |
| ⁴Solvent resistance of the hardened film, tested by repeated rubbing of the film surface with a woodpulp cloth impregnated with methyl ethyl ketone (MEK). The number of rubbings that still did not produce any visible damage to the coating was measured. | | | | | | |
| ⁵Lead pencil hardness after the hardening, at which the film exhibits the first visible signs of damage. | | | | | | |
| ⁶Control resin: prepared in the same way as compositions 1,4,7,10,13 from dipropylene glycol diacrylate and di-trimethylolpropane tetraacetoacetate but without butyl acrylate. | | | | | | |

As aforementioned, unexpected observation was, that the curable compositions of this invention having lower acrylate (C=C) equivalents compared to the control composition, which contains no monofunctional vinyl compounds, do not differ in coating properties which are related to acrylate equivalent (see table 1). In general, products having higher acrylate equivalents should show, after hardening, an increased crosslinking density. High crosslinking density often causes higher solvent resistance and coating hardness. Surprisingly, this behavior was not observed in the products of this invention. Although the acrylate equivalent in the compositions of this invention was much smaller than in the control composition (table 1, column 3), no difference in coating properties between the coatings of this invention and the control coating was detected. A high level of solvent resistance and hardness in the cured coatings was maintained.

Another important technical advantage of curable compositions of this invention, comprising incorporated monofunctional vinyl compounds, is that adhesion to metallic substrates can be improved. ASTM D3359 provides a test method for assessing the adhesion of coating films to metallic substrates by applying and removing pressure-sensitive tape over cuts made in the film. In the test method, an "X-cut" is made in the film to the substrate, pressure-sensitive tape is applied over the cut and then removed, and adhesion is assessed qualitatively on a 0 to 5 scale, showing which percentage of polymer coating has been removed by the tape. Table 2 shows that acrylated compositions from examples 1, 4, 7, 10, 13 exhibit an improved adhesion on aluminum after UV-curing (test result = 2-3), which means 5-35% of the affected coating area was removed by the tape, compared to the control composition, which shows practically no adhesion on aluminum (test result = 0) and more than 65% of the affected coating area was removed by the tape.

**Table 2:**

| Coating | Composition of example | Milliequivalent C=C | Coating viscosity | UV-Dose mJ/cm² | ¹Classification | Aera removed |
|---|---|---|---|---|---|---|
| 1 | 1 | 3.48 | 380 mPas | 400 | 2 | 15-35% |
| 2 | 4 | 3.10 | 390 mPas | 400 | 2 | 15-35% |
| 3 | 7 | 2.76 | 360 mPas | 400 | 2 | 15-35% |
| 4 | 10 | 2.31 | 380 mPas | 400 | 2 | 15-35% |
| 5 | 13 | 1.79 | 360 mPas | 400 | 3 | 5-15% |
| 6 | Control | 4.79 | 400 mPas | 400 | 0 | > 65% |

| | | | | | | |
|---|---|---|---|---|---|---|
| ¹Measured according ASTM 3359 | | | | | | |

Besides the UV-curing, the materials of this invention are crosslinkable by electron beam or in presence of a thermal activated azo- or peroxide initiators or the materials of this invention may also be cured by reaction with compounds having multifunctional donor groups capable of chemical reaction with acrylate groups, such as for example amines, thioalcohols or multifunctional CH-acidic groups.

This invention will be further explained by a consideration of the following nonlimiting examples which are intended to be purely exemplary of this invention.

### Examples

### Example 1-15

Into five 200ml bottles was weighed each 83,7g of ditrimethylopropane tetracetoacetate (acetoacetate functionality = 4, acidic C-H functionality = 8). A different amount (see table 3, column 4) of the monomeric vinyl compound n-butyl acrylate was added to each bottle. Then, to each bottle was added 1wt% (on the total weight) of trioctyl phosphine (TOP) catalyst, the bottles were sealed and then shaken. After the mild exotherm had subsided, they were placed into a 72°C oil bath for 6 hours. Gas chromatography analysis showed that butyl acrylate was completely consumed and gel permeation chromatography analysis and NMR analysis confirmed that butyl acrylate is attached to the acetoacetate groups. Table 3 shows the characteristics of the five intermediates A-E.

**Table 3:**

| No | Weight Di-TMP- (OAcAC)₄ | Milliequivalent acidic C-H | Weight butylacrylate | Milliequivalent C=C | ¹Consumption of C-H equivalents by acrylate | ²Donor functionality acetoacetate | ³Milliequivalent C-H/g (after reaction) |
|---|---|---|---|---|---|---|---|
| A | 83.7g | 1143 | 64.0g | 500 | 43.7% | 4.5 | 4.38 |
| B | 83.7g | 1143 | 73.0g | 570 | 49.9% | 4.0 | 3.67 |
| C | 83.7g | 1143 | 81.9g | 640 | 56.0% | 3.5 | 3.04 |
| D | 83.7g | 1143 | 90.9g | 710 | 62.1% | 3.0 | 2.48 |
| E | 83.7g | 1143 | 99.8g | 780 | 68.2% | 2.5 | 1.97 |

| | | | | | | | |
|---|---|---|---|---|---|---|---|
| ¹Consumption of C-H equivalents: (milliequivalent acrylate groups) / (milliequivalents acidic C-H groups in tetraacetoacetate) x 100 | | | | | | | |
| ²The donor functionality was determined by the following equation: Df = Of-(Of x % consumed C-H functions/100) Df =Donor functionality Of = Original functionality (tetraacetoacetate = 4 x 2 C-H groups) = 8 | | | | | | | |
| ³milliequivalent C-H/g = (milliequivalent C-H-functions- milliequivalent acrylate groups) / (weight Di-TMP-(OAcAC)₄ + weight butylacrylate) | | | | | | | |

About 5 gram of each intermediates (No. A-E) was further reacted at 60°C with 3 different amounts of dipropyleneglycol diacrylate (DPGDA, Functionality = 2), catalyzed by addition of 1wt% of TOP. Table 4 shows the characteristics of the acrylate group containing liquid curable compositions:

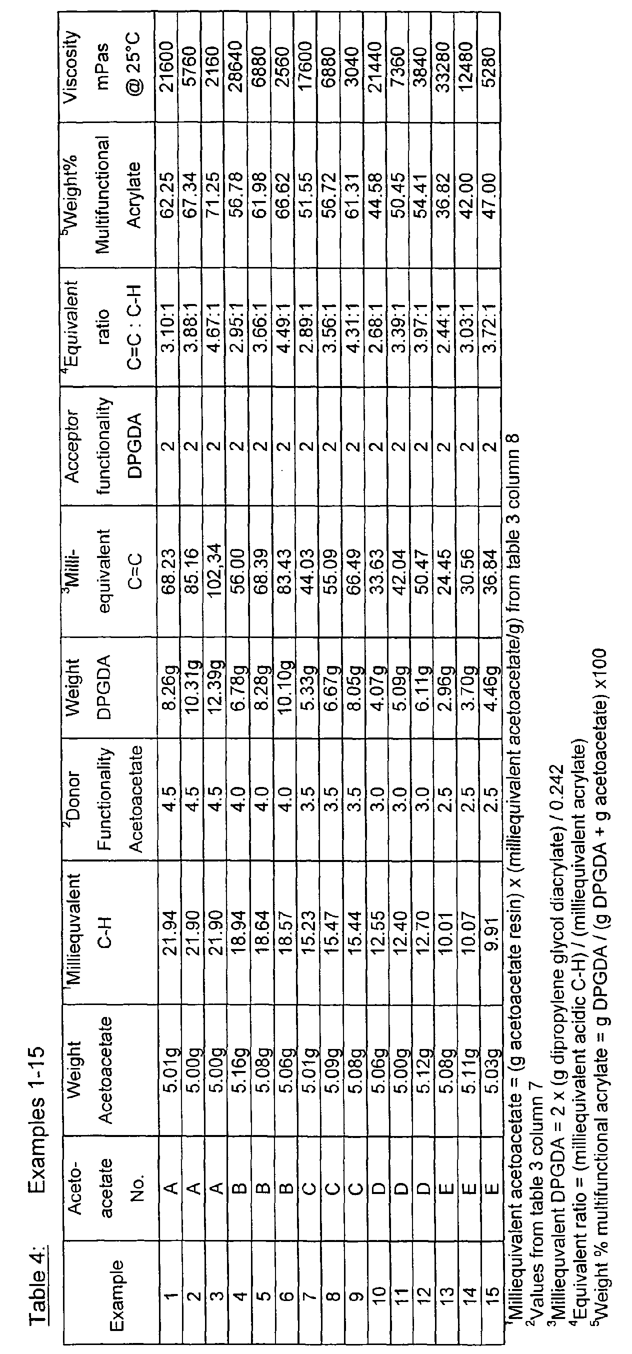

### Examples 16-30

An acetoacetylated alkyd resin was prepared after the following procedure: A mixture of 148.0g of phthalic anhydride, 119.0g of 2-methyl-1,3-propandiol, 88.0g of trimethylol propane and 1.5g of dibutyltinoxide was stirred at 200-220°C until 18g of water was collected. Then, the temperature was lowered to 140°C and 116.0g of methyl acetoacetate was added. Then, the temperature was gradually increased to 160°C and maintained until no more methanol was formed. Then, light vacuum was applied to remove small amounts of unreacted methyl acetoacetate. The acetoacetate base resin showed a viscosity of 8800 mPas @ 25°C and an acetoacetate equivalent of 2,37 mmol/g (4,74 mequivalent C-H/g).
Into five 100ml bottles was weighed each 30.0g of the acetoacetate compound. A different amount of the monomeric vinyl component n-butyl acrylate (see table 5, column 3) was added to each bottle. Then, to each bottle was added 0.4wt% (on the total weight) of potassium hydroxide (KOH), the bottles were sealed, shaken and placed into a 80°C oil bath for 6 hours. Gaschromatography analysis showed that butyl acrylate was completely consumed. Table 5 shows the characteristics of the five intermediates F-J.

**Table 5:**

| No | Weight Acetoacetate Resin | Weight Butyl acrylate | mequivalent C-H (excess) | Total Weight | mequivalent C-H/g (excess) | Viscosity mPas @ 25°C |
|---|---|---|---|---|---|---|
| F | 30.0g | 5.46g | 99.54 | 35.46g | 2.81 | 2200 |
| G | 30.0g | 7.27g | 85.32 | 37.27g | 2.29 | 2200 |
| H | 30.0g | 9.08g | 71.10 | 39.08g | 1.82 | 2400 |
| I | 30.0g | 10.88g | 56.88 | 40.88g | 1.39 | 2400 |
| J | 30.0g | 12.80g | 42.66 | 42.80g | 1.00 | 2500 |

5 gram of each intermediates (No. F-J) was further reacted at 70°C with 5 different amounts of dipropyleneglycol diacrylate (DPGDA, Functionality = 2), catalyzed by addition of 0.4wt% of powdered potassium hydroxide. The characteristics of the 25 acrylate group containing compositions are depicted in table 6.

**Table 6:**

| Examples 16-30 of acrylate group containing compositions based on alkyd resins | | | | | |
|---|---|---|---|---|---|
| Example No. | Acetoacetate No from table 5 | Weight Acetoacetate | Weight DPGDA | Weight% Multifunctional Acrylate | Reaction product |
| 16 | F | 5.0g | 6.79g | 57.6 | liqiud |
| 17 | F | 5.0g | 8.49g | 62.9 | liqiud |
| 18 | F | 5.0g | 10.19g | 67.1 | liqiud |
| 19 | G | 5.0g | 5.54g | 52.6 | liqiud |
| 20 | G | 5.0g | 6.93g | 58.1 | liqiud |
| 21 | G | 5.0g | 8.31g | 62.4 | liqiud |
| 22 | H | 5.0g | 4.40g | 46.8 | liqiud |
| 23 | H | 5.0g | 5.51g | 52.4 | liqiud |
| 24 | H | 5.0g | 6.61g | 56.9 | liqiud |
| 25 | I | 5.0g | 3.37g | 40.3 | liqiud |
| 26 | I | 5.0g | 4.21g | 45.8 | liqiud |
| 27 | I | 5.0g | 5.05g | 50.2 | liqiud |
| 28 | J | 5.0g | 2.41g | 32.5 | liqiud |
| 29 | J | 5.0g | 3.01g | 37.5 | liqiud |
| 30 | J | 5.0g | 3.62g | 42.0 | liqiud |

### Example 31

700 g of gum rosin (collophony, acid value: 165 mg KOH/ g, softening point: 70°C) was stirred under nitrogen for 90 minutes at a temperature of 180°C. Then, 64.0 g of maleic anhydride was added. The temperature was maintained at 180°C for 15 minutes, then raised to 215°C and stirred at that temperature for 1 hour. A test with N,N-dimethyl aniline showed that at that point the reaction mixture contains no more free maleic anhydride. Then, a mixture of 155.0 g of pentaerythritol and 0.60 g of magnesium oxide was added in small portions. After the addition was complete, the temperature was raised to 265 to 270°C. The reaction mixture was stirred and the temperature was maintained until the acid value decreased to 10 mg KOH/g. The temperature was lowered to 140°C and product was neutralized with a small amount of potassium hydroxide until the acid value dropped below 2 mg KOH/g and 116.0g of methyl acetoacetate was added. The temperature was gradually increased to 166°C and maintained until no more methanol was formed by transesterificaton and collected by distillation. 100g of the amber colored acetoacetylated product was mixed with 10g of butyl acrylate and treated with 2.0g of diazabicyclundecene at 90°C for 3 hours, followed by the addition of 90.0g of dipropylene glycol diacrylate. The mixture was stirred for another 6 hours at 80°C, yielding an amber colored acrylated maleic modified rosin ester, dissolved in dipropylene glycol diacrylate. Acrylate equivalent: 3,5 mmol/g.

### Example 32

20.0g of butyl acrylate, 60.0g methyl methacrylate and 20.0g of 2-acetoacetoxyethyl methacrylate was dissolved in 100g of toluene and copolymerized at 90°C in presence of 1,5g of azobisisobutyronitrile (AIBN). To the polymer solution a mixture of 5.0g of methyl vinyl ketone and 10.0g of butyl acrylate was added followed by 1.5g of diazabicycloundecene (DBU). The mixture was warmed to 50°C for 8 hours. Gaschromatography showed the complete reaction of butyl acrylate and methyl vinyl ketone. Then, toluene was removed by evaporation under reduced pressure (50 mbar). Viscosity: 5200 mPas @ 25°C. 10g of the resin was diluted with 9.0g of 1,6-hexanadiol diacrylate and stirred at 60°C for 4 hours. Then, 0.25g of 2-hydroxy-2-methylpropiophenone (Darcure 1173) was dissolved in the mixture. The coating was applied on top of an aluminum test panel in a film thickness of 50 µm and cured at a belt speed of 16 m/minute with a Fusion H bulb. Solvent resistance: > 50 MEK double-rubs.

### Example 33

5.0g of the acetoacetate resin base used for examples 16-40 (2.37 mmole acetoacetate/g, viscosity: 8800 mPas @ 25°C) was mixed with 1.0g of butyl acrylate and 6.0g of tripropylene glycol diacrylate. The solution was warmed to 80°C and treated with 0.1 g of powdered potassium hydroxide. The mixture was stirred at 80°C for 6 hours yielding an acrylate group containing resin having a viscosity of 6200 mPas @ 25°C.

### Example 34

2.0g of acetyl acetone, 0.70g of butyl acrylate and 4.0g of trimethylol propane triacrylate and 3.0g of dipropylene glycol diacrylate were mixed and treated with 0.10g of diazabicyloundecene (DBU). After the exothem has subsided, the mixture was stirred at 80°C for 3 hours. The product shows a viscosity of 5.2 Pas at 25°C and a molecular weight of Mw = 2100.

### Example 35

0.70g of acrylonitrile and 4.0g of trimethylol propane triacrylate and 3.0g of dipropylene glycol diacrylate and were mixed and treated with 0.10g of diazabicyloundecene (DBU). Then, 2.0g of acetyl acetone was added dropwise. After addition was complete, the mixture was stirred at 50°C for 8 hours. The product shows a viscosity of 6.2 Pas at 25°C and a molecular weight of Mw = 2300.

### Example 36

2.0g of diethyl malonate, 0.70g of butyl acrylate and 4.0g of trimethylol propane triacrylate and 3.0g of dipropylene glycol diacrylate were mixed and treated with 0.10g of diazabicyloundecene (DBU). After the exothem has subsided, the mixture was stirred at 80°C for 3 hours. The product shows a viscosity of 6.7 Pas at 25°C and a molecular weight of Mw = 2200.

## Claims

1. An acrylate group containing curable liquid composition obtainable by reacting
(a) at least one monofunctional vinyl compound,
(b) at least one multifunctional acrylic ester,
with
(c) at least one β-dicarbonyl compound having more than one acidic C-H function
wherein
the equivalent ratio of the vinyl groups of the monofunctional vinyl compound (a) to the acidic C-H functions of the compound (c) is in the range from 0.01 : 1 to 0.9 : 1
and
the equivalent ratio of all unsaturated groups from both monofunctional vinyl compound (a) and multifunctional acrylic esters (b) to the acidic C-H functions of the compound (c) is > 1.05 : 1.

2. The composition according to claim 1, **characterized in that** component (a) is selected from the group consisting of acrylic esters (acrylates), alkyl vinyl ketones, acroleine, acrylonitrile, acrylamide or vinylsulfonate.

3. The composition according to claims 1 to 2 **characterized in that** component (c) is selected from the group consisting of acetoacetates, β-diketones or malonates.

4. The composition of claim 1, **characterized in that** the monofunctional vinyl compound has at least one additional functional group having atoms other than carbon and hydrogen.

5. The composition according to claim 4, **characterized in that** the monofunctional vinyl compound having at least one additional functional group is 2-hydroxyethyl acrylate, glycidyl acrylate, 2-isocyanatoethyl acrylate, polyethylene glycol monoacrylate, polypropylene glycol monoacrylate, perfluoroalkyl acrylate or a poly(dimethylsiloxane) monoacrylate.

6. A process for the preparation of the acrylate groups containing curable liquid composition as claimed in claim 1, **characterized in that**
(a) at least one monofunctional vinyl compound,
(b) at least one multifunctional acrylic ester,
are reacted with
(c) at least one β-dicarbonyl compound having more than one acidic C-H function,
such that
the equivalent ratio of the vinyl groups of the monofunctional vinyl compound (a) to the acidic C-H functions of the compound (c) is in the range from 0.01 : 1 to 0.9 : 1
and
the equivalent ratio of all unsaturated groups from both monofunctional vinyl compound (a) and multifunctional acrylic esters (b) to the acidic C-H functions of the compound (c) is > 1.05 : 1.

7. The process of claim 6, **characterized in that** the monofunctional vinyl compound has at least one additional functional group having atoms other than carbon and hydrogen.

8. The process according to claim 6, **characterized in that** component (a) is reacted with component (c) prior to the reaction with component (b).

9. The process according to claims 6 to 8, **characterized in that** the process is carried out in presence of a catalyst capable to catalyze the reaction between vinyl functions and acidic C-H functions.

10. The process according to claim 9, **characterized in that** the catalyst is selected from the group consisting of organic and inorganic basic compounds, having a pK > 11 or from the group consisting of ammonium halogenides or from the group consisting of tertiary organic phosphines.

11. Use of the compositions as claimed in claims 1 to 5 for the preparation of crosslinked materials.

12. The use according to claim 11, **characterized in that** the crosslinking occurs by UV (ultraviolet) light or electron beam or heat.

13. The use according to claim 12, **characterized in that** the crosslinking occurs in the absence of a photo initiator.

14. The use according to claim 13, **characterized in that** the crosslinking occurs by reaction with compounds having multifunctional donor groups, which are capable of a chemical reaction with acrylate groups.

15. Substrates coated with crosslinked products, derived from the compositions according to claims 1-5, which are crosslinked by any of the methods as claimed in claims 12 to 14.
